# EUROPEAN PATENT SPECIFICATION

(11) **EP 0 857 022 B1**
(45) Date of publication and mention of the grant of the patent: **09.07.2003**
(21) Application number: 96927453.9
(22) Date of filing: 27.08.1996
(51) Int. Cl.: A23B 7/02, A23B 7/08, A23L 1/212, A23B 7/022

(54) **FRUIT PRODUCTS**
FRUCHTERZEUGNISSE
FRUITS

(30) Priority: 28.08.1995 AU PN506195
(43) Date of publication of application: 12.08.1998
(73) Proprietor: Byron Australia Pty Ltd., Rushcutters Bay, NSW 2011 (AU)
(72) Inventor: LEWIS, Deborah, Ann, Rushcutters Bay, NSW 2011 (AU); LEWIS, Victor, Marcus, Rushcutters Bay, NSW 2011 (AU); LEWIS, David, Adrian, Rushcutters Bay, NSW 2011 (AU)
(74) Representative: Flaccus, Rolf-Dieter, Dr.
(86) International application number: AU9600536
(87) International publication number: WO97007684

(56) References cited:
- EP-A- 0 331 281
- EP-A- 0 337 249
- WO-A-94/24876
- GB-A- 1 004 522
- GB-A- 1 074 040
- GB-A- 1 228 175
- US-A- 3 952 112
- US-A- 4 103 035
- US-A- 4 256 772
- US-A- 5 073 400
- SULLIVAN: "Continuous explosion puffing of apples" JOURNAL OF FOOD SCIENCE, vol. 45, 1980, pages 1550-1555, XP002076165

## Description

### FIELD OF INVENTION

This invention is concerned with processes for the production of fruit products, particularly dried or semi-dried fruit pieces.

The goals of fruit preservation are to establish microbial and chemical stability and a desirable organoleptic character of the food which allow the product to be consumed both in and out of season. Methods have evolved empirically such as sun drying, forced air drying, salting and sugaring of fruits and these foods have subsequently become key components in a multitude of processes used throughout the world. Apart from dessert usage, preserved fruits are now widely used in the cereal, snack food, baking and dairy industries.

An important factor in the production of dried or semi-dried foods is to ensure that the available moisture or water activity (Aw) in the fruit is low enough to inhibit microbial growth during storage. The water activity of a food is defined as the partial pressure of water in the food divided by the saturation pressure of water at the same temperature. Low Aw's have been achieved in fruit by the reduction of the moisture content of the fruit below the critical level needed to sustain microbial growth. Upon storage however, these fruits may undergo further losses in moisture and chemical reactions may occur which result in undesirable changes in the colour, flavour and textural properties, leading to a hard, dry product which often has poor rehydration or eating properties. This is especially a problem when the fruit is packaged with dry food products like breakfast cereals which have a lower water activity than the fruit.

One approach to fruit preservation has employed the use of various edible humectants and sugars to achieve microbiologically stable intermediate moisture foods. Such foods are usually 15% to 50% moisture, have Aw's of 0.60 to 0.85 and remain soft and are generally stable at room temperature. These methods of moisture control in dehydrated fruits such as apples and raisins have involved either the addition of simple sugars like fructose and dextrose and/or polyols like glycerol in hypertonic solutions for osmotic dehydration. Solute addition may require the use of a vacuum and/or subsequent traditional dehydration (US Patent 5,000,972; Nafisi-Movaghar, K, 1991). Such products do not require packaging in hermetically sealed containers, sterilization, refrigeration or freezing. For example US Patent 4,390,550 (Kahn *et al*, 1983) disclosed an invention in which the fruit was infused with sugar(s) to reduce the water activity to a range of 0.45 to 0.65 and depress the freezing temperature of the product.

Several drawbacks prevail in these methods such as the long times necessary to achieve solute infusion and the quantity of leftover infusion syrup produced which needs to be recycled in some way. The texture of products made by these methods is often substantially different from the fresh fruit. Although these products are of a low enough Aw to retard microbial growth, they are often of higher Aw than the foods of which they are components like breakfast cereals and flour mixes which are often at low Aw (0.1 to 0.2) and moisture content (1% to 2%). Subsequently upon storage, a displacement of moisture occurs from the fruit to the cereal, resulting in the undesirable hardening of the fruit and concomitant softening of the cereaL

Methods using a combination of osmotic dehydration and water activity control can be used either in addition to, or in place of traditional dehydration and vacuum drying (US Patent 3,952,112; Fulger *et al*, 1976). These processes are also slow and/or expensive. For example, US Patents 4,917,910 (Hseih *et al*, 1990) and 5,000,971 (Hseih *et al*, 1991) disclosed methods of increasing the amount of solute infusion into raisins and other fruits. A combination of mechanical tumbling of the fruit and liquid humectant addition was used which resulted in an Aw equal to 0.3 or less but this takes up to a month to attain.

Another method includes a pre-treatment of the fruit by blanching followed by infusion of solutes at elevated temperatures (US Patent 5,073,400; Bruno *et al*, 1991; US Patent 5,286,505; Hartson *et al*, 1994). However, these methods require from twenty four hours to several weeks to achieve high levels of humectant uptake and low Aw. It is therefore desirable to reduce the time, cost and waste factors involved in processing dried fruits and at the same time maintain the optimal functional and organoleptic properties of the product.

EP 0 331 281 A describes a vacuum drying process for producing dried fruit and vegetables. Fresh fruit/vegetables are soaked in an aqueous solution containing a reducing acid, a protein donor substance and a disaccharide to avoid browning reactions, preferably subject to freeze/thaw tenderization, and then vacuum dried so as to convert the wet non-shelf stable product to a fully dried product of moisture content less than 10%.

It is an object of this invention to provide a rapid and simple process of introducing solutes into fruits in order to control or modify one or more of moisture content, water activity, colour, flavour and texture, whilst avoiding the aforementioned disadvantages associated with prior proposals.

### SUMMARY OF THE INVENTION

The invention is concerned with a process for introducing solutes into dried fruit or fruit pieces, in a manner which reduces the time, cost and waste factors conventionally involved in processing dried fruits, whilst at the same time maintaining optimal functional and organoleptic properties thereof.

The invention comprises:
(a) providing dried fruit of a moisture content between about 5% to about 40% or more;
(b) subjecting the dried fruit to a process which causes cracks in the fruit whilst maintaining the essential structure and appearance of the fruit;
(c) mixing the fruit with a solute solution containing one or more water activity controlling solutes for a time sufficient to allow complete infusion of solute into the fruit;
(d) removing, if necessary, any remnant infusion liquid and thereafter drying the fruit product to a desired moisture content and water activity; and optionally,
(e) treating the surface of the fruit with one or more sugars.

### DETAILED DESCRIPTION

Dried fruit or fruit pieces of a moisture content of 5% to 40% or more are treated according to the processes of this invention so as to include solutes which control or modify water activity and optionally moisture content, colour, flavour and texture. The inventive processes allow rapid uptake of solutes into dried fruit with resultant processing benefits.

The term "fruit" as used herein refers to whole fruit or fruit pieces such as those used in breakfast cereals and other food products. The size of fruit or fruit pieces depends upon ultimate intended use, which may, for example, be as a breakfast cereal, snack food or product for use in baking or dairy products, and may vary, for example, from about 2 x 2 x 2 mm to segments approximately 60 x 30 x 10 mm or greater (for use such as snack foods). Examples of suitable fruit include, apple, pear, pineapple, sultanas, raisins, currents, prunes, blueberry, papaya, cranberry, banana, fig, peach, cherry and the like. The term "fruit" more specifically refers to those fruit types which at maturity have a substantial amount of fleshy tissue. It additionally includes certain vegetables containing fleshy tissue, such as carrots, tomatoes, capsicums (such as green and red peppers) and the like.

The invention comprises:
(a) providing dried fruit of a moisture content between about 5% to about 40% or more;
(b) subjecting the dried fruit to a process which causes cracks in the fruit whilst maintaining the essential structure and appearance of the fruit;
(c) mixing the fruit with a solute solution containing one or more water activity controlling solutes for a time sufficient to allow complete infusion of solute into the fruit;
(d) removing, if necessary, any remnant infusion liquid and thereafter drying the fruit product to a desired moisture content and water activity; and optionally,
(e) treating the surface of the fruit with one or more sugars.

The invention is concerned with the treatment of predried fruits or fruit pieces that have been dried to a moisture content of about 5% to 40% or higher, such as about 5% to about 35%, more particularly about 8% to about 35%. Fruits or fruit pieces are dehydrated to some extent by traditional methods such as hot air drying, vacuum drying, freeze drying, or other methods which are well known in the art. Preferably, the dried fruit which may be treated according to this invention are suitably sized fruit pieces as described above. The size of the fruit piece depends upon its ultimate intended use, which may, for example, be as a breakfast cereal, snack food, or product for use in baking or dairy products.

Disruption of the structure of the fruit may take the form of an increase in the surface area of the fruit, and/or the disruption of the internal structure of the fruit, with the production of cracks on the surface and/or the edges of the fruit. Accordingly, the fruit is disrupted in its physical structure. Fruit pieces are subjected to a process (or otherwise put a "regime") which may cause cracks on the surface and/or edges with a fruit or fruit piece. In this regard the term "cracks" includes slits, fissures, openings, apertures and the like. These cracks may be minute and can be readily observed unaided by simple magnification. The process of inducing cracks within the fruit or fruit piece is a mechanical or physical process where the fruit is compressed by passage through a roller mill, subject to puffing by toasting or explosion puffing (Sullivan *et al*, 1980, *Journal of Food Science* 45:1550-1558) or by other means which induce cracks in the fruit piece. The use of compression through a roller mill is the simplest and preferred method. For the purpose of convenience, this invention will be described in greater detail herein with reference to a roller mill but it is to be understood that the invention is not limited to the use of these methods.

If a roller mill is used, a gap between the rollers of the mill is adjusted so that the piece of fruit is compressed and then released to such an extent that the fruit surface becomes cracked. The process of compression and subsequent release of pressure appears to cause certain fruits to achieve an expanded or puffy texture. The extent of puffing varies with different fruits. The extent of rolling necessary will depend on the type of fruit, the size of the fruit or fruit piece, the moisture content, the temperature of the fruit at rolling and the amount and type of solutes that are desired to be introduced into the fruit. With some fruits it may be beneficial to warm them before rolling. If the fruit is too high in moisture, it may stick to the rolls and may be too plastic to achieve the required degree of disruption, and if the fruit is too dry, it may shatter and may produce a sub-optimal texture and unnatural appearance of the final fruit product.

Whatever the method of physical treatment used, the fruit or fruit piece is maintained as an integral product without breakage or large tears, and preferably substantially maintains the overall shape or appearance of the fruit prior to treatment.

Using dried apple pieces (3 mm³ to 6 mm³, 14% to 26% moisture) as an example, rolling at too narrow a gap width results in complete loss of the integral appearance of the fruit seen as large tears and breakage of the apple pieces. Too wide a gap width does not give enough compression to induce any cracks or slits or openings in the fruit. When the gap width in reduced to the requisite range cracks in the still whole fruit pieces result. An increase in bulk density by about 20% to 40% is also observed.

With raisins, sultanas, currants and other vine fruits and berries, the fruit is dried to about 8% to 40% moisture, preferably surface cooled so that a harder layer is produced on the outer surface of the fruit, and passed through a roller mill set at such a gap width that on partial flattening of the fruit, a multitude of minute cracks is formed around the periphery of the fruits. If the fruit is rolled at too narrow a gap width, flesh from inside the fruit is squeezed out, and the fruit is permanently flattened, or distorted.

The extent of rolling through a roller mill which provides cracking of the fruit surface whilst maintaining the essential structure and appearance of the fruit is generally empirically determined. By way of example apple pieces may be rolled through a roller mill having a gap width from about 5% to 20% of the average apple piece width, pear pieces may be rolled through a roller mill with a gap width equal about to 30% to 45% of the piece width, and raisins or sultanas may be rolled through a roller, mill having a gap width between about 30% to 50% of the fruit width.

Preferably, but without limiting the invention, fruit or fruit pieces are compressed through rolling such that the uptake of solute is between about 1.3 to about 1.9 fold greater by weight than that of untreated fruit, more preferably from about 1.4 to about 1.6 fold greater.

After compression or similar treatment of fruit as described above, it is then treated with a solute solution containing one or more solutes which control water activity and which may be selected from a polyalcohol humectant such as glycerol or sorbitol or a mix thereof, either pure or diluted with water, or a solution of sugar or a mixture of sugars. The solute solution may contain other solutes such as fruit juices, flavours, colours, and preservatives.

While an excess of solution may be added to the fruits it is preferable that the quantity of solution added be a predetermined amount that will be completely absorbed. The treatment of the fruit may be at ambient temperature. However, the absorption rate is increased by elevating the temperature to about 40° to 50°C or even higher. During solute treatment of the fruit, gentle agitation, for example by tumbling, may be used to ensure even mixing of the solutes with the fruits. During the infusion process, it is possible to achieve a specific degree of dehydration by controlling the temperature and humidity in the mixing vessel/chamber.

The solute solution containing water activity controlling solutes is mixed with the fruit for a time sufficient to allow infusion of the solute or solutes into the fruit. Solute uptake can be readily determined by established methods in the art.

In order to avoid residual excess unabsorbed solution, the extent of compression of the fruit or fruit piece can be controlled. Using dried apple pieces as an example, the amount of solution absorbed by the apple pieces increases proportionally to a decrease in the gap width of a rolling mill. The final fruit product yield increases with the degree of compression of the fruit. It is found that it is possible to add a pre-determined quantity of solution to this rolled fruit and achieve total solution absorption thereby avoiding possible leaching of natural solutes from the fruit and avoiding the necessity of syrup recovery. It is also observed that if the extent of rolling is excessive, a loss in the natural texture to the fruit occurs as described previously.

After absorption of solutes, the fruits may sometimes require further drying to a specific desired moisture content and water activity. Unabsorbed solution may, if necessary be removed from the surface of the fruit by mechanical methods (for example by subjecting the fruit or fruit pieces to centrifugation), prior to dehydration or surface treatment. Any recovered solution may then after treatment be recycled back into the process. However it is usually possible and desirable to avoid both surface solute removal and dehydration by: (i) rolling the fruit to the required degree; (ii) predetermining the quantity of solution to be added; (iii) adjusting the temperature and time of infusion; (iv) adjusting the air-flow and its relative humidity in the infusion vessel.

The fruit product, treated as described with the water-activity controlling solutes may be further treated with one or more dry sugar or sugars which coat the fruit and assist in preventing cohesion of fruit/fruit pieces. Examples of sugars include sucrose, dextrose and fructose. Free-flowing agents, such as starches, cereal meals and other such substances well known in the art may also be used to form a coating on the outside of the fruit. Examples of such free-flowing agents include gluten and semolina. The coating may be partially absorbed into the fruit on standing.

The resultant fruit products are soft fruit pieces which retain most of the original textural characteristics of the fruit and can be made to a wide range of controllable water activities, flavours and colours. Such soft fruit pieces of very low Aw (0.20 to 0.35) are particularly useful for inclusion in breakfast cereals and cake and bread mixes where they will remain separate, soft and tender. They even remain soft and tender if included in frozen products. Higher Aw soft fruit pieces can be included in formulations which may be further processed as in confectionery, muesli and granola bars. This invention is applicable to a wide range of dried fruits such as apple, pear, pineapple, sultanas, raisins, currants, prunes, blueberry, papaya, cranberry, banana, fig, peach, cherry, melon, pepper, tomato and the like.

The processes herein described allows very rapid production of water activity controlled fruit compared with prior art processes. Generally, water activity controlled fruit may be produced in about thirty minutes to about four hours.
The process described above may be illustrated by the following non-limiting examples. Percentages are expressed on a weight basis and for each example. Example 1, 4 and 5 are indicative of a low water activity fruit which may be used in very low water activity cereals or flour mixes. Example 2 and 3 describe medium water activity soft fruit products which are applicable as a component of other formulations such as baked snacks and cereals.

Percentages referred to herein are by weight unless otherwise specified.

### EXAMPLE 1

### Low Water Activity Apple

Dehydrated apple dice (5 mm³) containing 500 ppm to 1000 ppm SO₂ (I), and at 20% moisture, were compressed by passage through a roller mill of gap width equal to 0.96 mm or about 10% of the average apple dice width. The resultant rolled apple dice (II) had a puffed and expanded appearance. The average bulk density of the unrolled apple dice was 0.24 g/ml. A solution (III) of weight equal to the rolled apple dice (II), which contained sucrose (57%), water (24.95%), glycerol (17%), malic acid (0.7%) and natural apple flavouring (0.35%) and heated to 80°C was added to the rolled apple dice. The apple and solution (IV) were combined by tumbling at 40°C to 50°C until the solution was absorbed, one hour. The apples were then dried (V) to 80% of the wet weight of (IV) by blowing hot air at 70°C to 80°C directly into the tumbling chamber containing the apples, taking thirty minutes. The apples were then dusted by tumbling with powdered sugar at 20% of this dried weight (V) and the resultant final water activity was 0.33. The final yield was a 98% increase on the starting dried apple (I) weight and the product was completed and ready for use in two hours.

Samples were packaged in laminated bags of aluminium foil and polythene in air and sealed and stored at room temperature and at 40°C. After four months of storage, the apples showed no signs of deterioration, had excellent colour and flavour and maintained more of the original soft texture and moistness characteristic of fresh apple. Storage of the treated apples of Aw = 0.33 with breakfast cereal which had a water activity of 0.24 for one month at room temperature, resulted in the fruit cereal mix having a water activity of 0.30. The cereal was still dry and crisp and the apple was still soft and moist with no change in colour or flavour. It was estimated that the product would have a shelf-life of about two years at ambient temperature.

### EXAMPLE 2

### Medium Water Activity Apple

Rolled apple dice (II) in Example 1 were combined with an equal weight of solution (VI) containing water (54.3%), sucrose (45.3%) and natural apple flavour (0.45%). The apple and solution mix (VII) were tumbled at 40°C to 50°C until the solution was absorbed (one hour). The apples (VII) were dried to 75% of the wet weight of (VII) by blowing hot air at 70°C to 80°C directly into the tumbling chamber containing the apples which took thirty minutes. As an alternative, the apple/solution mix (VII) was dried to the same extent in a tray dehydrator with heated air at 70°C passing through the fruit product. The dried apples (VIII) were dusted by tumbling with powdered sugar at 20% of the dried weight (VIII) and the resultant final water activity was 0.62. The final yield was a 98% increase of the starting dried apple (I) weight.

### EXAMPLE 3

### Apple Flavoured with Natural Blackcurrant Juice

Dehydrated apple dice (I) were treated the same way as in Example 1 except that the rolled apple (II) was mixed with a equivalent quantity of solution (IX) containing sucrose (44.2%), glycerol (26.6%), water (18.6%), blackcurrant juice concentrate of 68° Brix (9.9%), malic acid (0.13%) and citric acid (0.13%). The apple and solution combination (X) was mixed by tumbling as in Example 1 and subsequently treated in an identical manner as Example 1. The final yield was a 95% increase in the original dehydrated apple (I) used and the final water activity was 0.43. The flavoured apple had a natural blackcurrant flavour and colour with a soft moist texture.

### EXAMPLE 4

### Low Water Activity Pear

Dehydrated pear dice of about 5 mm³ containing 500 ppm to 1000 ppm SO₂ (XI), and at 20% moisture were rolled by passage through a roller mill of gap width equal to 42.7% of the dice width. An equivalent quantity of solution (XII) containing sucrose (42.8%), glycerol (38.2%), water (18.4%), citric acid (0.3%), and natural pear flavour (0.3%) at 80°C were mixed with the rolled pear dice by tumbling for three hours at 40°C to 50°C. The pear and solution mix (XIII) was then dehydrated to 80% of the weight of (XIII) as in Example 1. The dried pear (XIV) was dusted with powdered sugar at 20% of weight (XIV). The resultant yield was 71% of the starting dehydrated pear (XI) with a water activity of 0.34. The resultant pear pieces remained separate, were tender, and had a natural pear flavour and texture. Storage studies with low moisture breakfast cereal (Aw=0.2) for over one month at ambient temperature showed no evidence of migration of moisture from the pear to the cereal. The cereal remained crisp and there was no change in the pear flavour, texture or colour characteristics.

### EXAMPLE 5

### Low Water Activity Raisins

Raisins with a moisture content of 14.5% and a length of 9mm to 14 mm and average width of 5.6 mm were dried at 60°C to 70°C in a hot air dryer to a moisture content of 11%. The fruit was immediately surface cooled to produce a firm outer layer on the fruit, and was then immediately passed through a roller mill set at a gap of 2.4 mm. After passing through the mill, the raisins were slightly flattened but had numerous cracks on the outer perimeter of the flattened fruit. The average width of the fruit after rolling was 4.7 mm showing a degree of resistance to rolling and almost a resumption to the original dimensions of the fruit before rolling. The raisins were placed in a slowly rotating mixer, and 8% of glycerol was added, based on the weight of raisins used. The mixer was maintained at 45°C to 50°C for about an hour, after which time there was no free glycerol left in the mixer. The glycerol-treated raisins were removed from the mixer and cooled by air to ambient temperature. After mixing, the raisins had resumed their normal ovoid shape. They were then placed in a more rapidly rotating mixer and 33% of powdered sugar, based on the weight of glycerol treated raisins, was added. All the sugar was absorbed onto the surface of the raisins within ten minutes. The resultant fruit had a water activity of 0.21, was very free flowing with a good texture. On storage with a dry bran based cereal with a water activity of 0.18, the texture of the fruit had not changed after four months.

Those skilled in the art will appreciate that the invention described herein is susceptible to variations and modifications other than those specifically described.

## Claims

1. A process for introducing solutes into dried fruit which comprises:
(a) providing dried fruit of a moisture content between 5% to 40% or more;
(b) subjecting the dried fruit to a process which causes cracks in the fruit whilst maintaining the essential structure and appearance of the fruit;
(c) mixing the fruit with a solute solution containing one or more water activity controlling solutes for a time sufficient to allow complete infusion of solute into the fruit;
(d) removing, if necessary, any remnant infusion liquid and thereafter drying the fruit product to a desired moisture content and water activity; and optionally,
(e) treating the surface of the fruit with one or more sugars.

2. A process according to claim 1 wherein step (b) is provided by passing the fruit through a roller mill, by explosion puffing or toasting.

3. A process according to claim 2 wherein the fruit is rolled such that the uptake of solute is between about 1.3 to about 1.9 fold greater than that of unrolled fruit.

4. A process according to any one of claims 1 to 3 wherein the fruit is a fruit piece having dimensions from about 2 x 2 x 2 mm to about 60 x 30 x 10 mm.

5. A process according to any one of claims 1 to 3 wherein the fruit is an apple piece which is rolled through a roller mill having a roller gap width from 5% to 20% of the average apple piece width.

6. A process according to any previous claim wherein the fruit is a pear piece which is rolled through a roller mill of roller gap width equal to 30% to 45% of the piece width.

7. A process according to any previous claim wherein the fruit is a raisin which is rolled through a roller mill having a roll gap width between 30% to 50% of the raisin width.

8. A process according to claim 1 wherein a water activity-controlled fruit is produced within about thirty minutes to about four hours.

## Patentansprüche

1. Verfahren zum Einbringen von gelösten Stoffen in getrocknete Früchte, umfassend:
(a) Bereitstellen von getrockneten Früchten, die einen Feuchtigkeitsgehalt von 5 % bis 40 % oder mehr aufweisen;
(b) Behandeln der getrockneten Früchte mit einem Verfahren, welches in den Früchten Risse hervorruft, wobei die Struktur und Erscheinung der Früchte im Wesentlichen erhalten bleibt;
(c) Mischen der Früchte mit einer einen oder mehrere gelöste, die Wasseraktivität steuernde Stoffe enthaltenden Lösung über einen Zeitraum, der das Einziehen des/der gelösten Stoffe(s) in die Früchte ermöglicht;
(d) falls erforderlich, Entfernen etwaiger noch verbleibender Einziehflüssigkeit und anschließendes Trocknen des Fruchterzeugnisses bis zu einem erwünschten Feuchtigkeitsgehalt und erwünschter Wasseraktivität; und, wahlweise,
(e) Behandeln der Oberfläche der Früchte mit einem oder mehreren Zuckern.

2. Verfahren nach Anspruch 1, bei dem Schritt (b) dadurch erfolgt, dass die Früchte eine Walzenmühle durchlaufen oder durch Explosionstrocknen oder Toasten.

3. Verfahren nach Anspruch 2, bei dem die Früchte so gewalzt werden, dass die Aufnahme von gelöstem/gelösten Stoff(en) um das etwa 1,3- bis etwa 1,9-fache größer ist, als die Aufnahme bei nicht gewalzten Früchten.

4. Verfahren nach einem der Ansprüche 1 bis 3, bei dem die Frucht ein Fruchtstück mit Abmessungen von etwa 2 x 2 x 2 mm bis etwa 60 x 30 x 10 mm ist.

5. Verfahren nach einem der Ansprüche 1 bis 3, bei dem die Frucht ein Apfelstück ist, das mittels einer Walzenmühle, deren Walzenspaltbreite 5 bis 20 % der durchschnittlichen Breite der Apfelstücke beträgt, gewalzt wird.

6. Verfahren nach einem der vorhergehenden Ansprüche, bei dem die Frucht ein Birnenstück ist, das mittels einer Walzenmühle, deren Walzenspaltbreite 30 bis 45 % der Birnenstück-Breite beträgt, gewalzt wird.

7. Verfahren nach einem der vorhergehenden Ansprüche, bei dem die Frucht eine Rosine ist, die mittels einer Walzenmühle gewalzt wird, deren Walzenspaltbreite von 30 % bis 50 % der Rosinenbreite beträgt.

8. Verfahren nach Anspruch 1, bei dem eine eine kontrollierte Wasseraktivität aufweisende Frucht innerhalb von etwa 30 Minuten bis etwa 4 Stunden erzeugt wird.

## Revendications

1. Procédé d'introduction de solutés dans des fruits secs, qui comprend:
(a) prévoir des fruits secs d'une teneur en humidité entre 5% et 40% ou supérieure;
(b) soumettre les fruits secs à un procédé qui provoque des fissures dans les fruits tout en conservant la structure essentielle et l'apparence des fruits;
(c) mélanger les fruits avec une solution de solutés contenant un ou plusieurs solutés de contrôle d'activité aqueuse pendant un temps suffisant pour permettre l'infusion complète du soluté dans les fruits;
(d) retirer, si nécessaire, le liquide d'infusion résiduel quelconque et sécher par la suite le produit à base de fruits à un teneur en humidité et à une activité aqueuse souhaitées; et éventuellement,
(e) traiter la surface des fruits à l'aide d'un ou plusieurs sucres.

2. Procédé selon la revendication 1, dans lequel l'étape (b) est exécutée en faisant passer les fruits à travers un laminoir, par soufflage à déflagration ou rôtissage.

3. Procédé selon la revendication 2, dans lequel les fruits sont aplatis de sorte que l'absorption du soluté est d'un ordre entre environ 1,3 et environ 1,9 fois supérieur à celui de fruits non aplatis.

4. Procédé selon l'une quelconque des revendications 1 à 3, dans lequel le fruit est un fruit dont les dimensions sont d'environ 2 x 2 x 2 mm à environ 60 x 30 x 10 mm.

5. Procédé selon l'une quelconque des revendications 1 à 3, dans lequel le fruit est une pomme qui est laminée à travers un laminoir possédant une largeur d'écartement entre les cylindres de 5% à 20% de la largeur moyenne d'une pomme.

6. Procédé selon l'une quelconque des revendications précédentes, dans lequel le fruit est une poire qui est laminée à travers un laminoir d'une largeur d'écartement entre les cylindres égale à 30% à 45% de la largeur d'une poire.

7. Procédé selon l'une quelconque des revendications précédentes, dans lequel le fruit est un raisin qui est laminé à travers un laminoir ayant une largeur d'écartement entre les cylindres de laminage entre 30% et 50% de la largeur d'un raisin.

8. Procédé selon la revendication 1, dans lequel un fruit à contrôle d'activité aqueuse est produit entre environ trente minutes et environ quatre heures.
